# EUROPEAN PATENT APPLICATION

(11) **EP 3 904 655 A2**
(43) Date of publication of application: **03.11.2021**
(21) Application number: 21171586.7
(22) Date of filing: 30.04.2021
(51) Int. Cl.: F02C 1/10, F02C 7/143, F02C 7/12, H02K 9/00

(54) **TURBO-GENERATOR WITH INTEGRAL COOLING**

(30) Priority: 01.05.2020 US 202063018855 P
(71) Applicant: Hamilton Sundstrand Corporation, Charlotte, NC 28217-4578 (US)
(72) Inventor: MACDONALD, Malcolm, West Hartford, 06119 (US); RANJAN, Ram, West Hartford, 06117 (US)
(74) Representative: Dehns

(57) **Abstract**

A turbo-generator is provided including a housing (52), a plurality of turbine impellers (56a, 56b) arranged within the housing, a shaft (58) extending between and coupling the plurality of turbine impellers; and a generator (50) mounted within the housing between the plurality of turbine impellers. The generator includes a stator (62) having a stator core (66) including a plurality of windings (68) and a rotor (64). The rotor is rotationally coupled to the shaft. A cooling system includes at least one cooling passage (70) integrated into the stator core of the generator.

## Description

### CROSS-REFERENCE TO RELATED APPLICATIONS

This application claims the benefit of U.S. Provisional Application No. 63/018,855 filed May 1, 2020.

### BACKGROUND

The present disclosure generally relates to systems for power generation in vehicles, and more specifically, to a turbo-generator for use in a power generation system of an aircraft.

Conventional aircraft achieve flight by using a fuel, such as jet fuel, combusted with air in a gas turbine engine to generate sufficient thrust to enable the wings to develop lift in order to keep the vehicle aloft. The gas turbine engine may also be used for generating power for onboard needs, such as, for example, hydraulic power for control surface actuation and electrical power for avionics equipment. Such gas turbine engines used to generate power for thrust, lift, and onboard power requirements typically operate in an open loop Brayton cycle. Such an approach has typically been suitable for powering aircraft.

However, vehicles fitted with electric propulsion means are becoming more common in the aircraft industry. As a result, onboard power generation is critical to not only for electric application, but also for distributed propulsion to reduce fuel burn.

### SUMMARY

According to one or more embodiments, a turbo-generator is provided including a housing, a plurality of turbine impellers arranged within the housing, a shaft extending between and coupling the plurality of turbine impellers; and a generator mounted within the housing between the plurality of turbine impellers. The generator includes a stator having a stator core including a plurality of windings and a rotor. The rotor is rotationally coupled to the shaft. A cooling system includes at least one cooling passage integrated into the stator core of the generator.

In addition to one or more of the features described above, or as an alternative, in further embodiments an outlet of the at least one cooling passage is arranged in fluid communication with an outlet of one of the plurality of turbine impellers.

In addition to one or more of the features described above, or as an alternative, in further embodiments the plurality of turbine impellers includes a first turbine impeller and a second turbine impeller.

In addition to one or more of the features described above, or as an alternative, in further embodiments the first turbine impeller and the second turbine impeller are arranged in series relative to a flow of first medium.

In addition to one or more of the features described above, or as an alternative, in further embodiments the first turbine impeller is configured to receive an axial flow of a first medium and expel the first medium radially outwardly, and the second turbine impeller is configured to receive a radial flow of the first medium and expel the first medium axially.

In addition to one or more of the features described above, or as an alternative, a fluid provided to the at least one cooling passage is operable to remove heat from the plurality of windings.

In addition to one or more of the features described above, or as an alternative, in further embodiments the at least one cooling passage is embedded within a portion of the plurality of windings.

In addition to one or more of the features described above, or as an alternative, in further embodiments the at least one cooling passage is formed in the core adjacent the plurality of windings.

In addition to one or more of the features described above, or as an alternative, in further embodiments a first medium is provided to the plurality of turbine impellers to operate the generator, and the first medium is also provided to the at least one cooling passage.

According to another embodiment, a power generation system includes a turbine, a generator including at least one cooling passage, at least one compressor operably coupled to the generator and driven by the turbine, and at least one heat exchanger. The turbine, the at least one compressor, and the at least one heat exchanger are arranged in a closed-loop having a supercritical medium circulating there through, and a portion of the supercritical medium is provided to the at least one cooling passage of the generator to directly cool the generator.

In addition to one or more of the features described above, or as an alternative, in further embodiments the power generation system is on board an aircraft.

In addition to one or more of the features described above, or as an alternative, in further embodiments the supercritical medium is carbon dioxide.

In addition to one or more of the features described above, or as an alternative, in further embodiments the generator includes a stator having a core and a plurality of windings, the supercritical medium provided to the at least one cooling passage being operable to remove heat from the plurality of windings.

In addition to one or more of the features described above, or as an alternative, in further embodiments the at least one cooling passage is embedded within the plurality of windings.

In addition to one or more of the features described above, or as an alternative, in further embodiments the at least one cooling passage is formed in the core adjacent the plurality of windings.

In addition to one or more of the features described above, or as an alternative, in further embodiments a bypass conduit extends from directly upstream of the at least one compressor to an inlet of the at least one cooling passage.

In addition to one or more of the features described above, or as an alternative, in further embodiments an outlet of the at least one cooling passage is arranged in fluid communication with an outlet of the turbine.

In addition to one or more of the features described above, or as an alternative, in further embodiments the turbine and the generator are integrally formed as a turbo-generator.

In addition to one or more of the features described above, or as an alternative, in further embodiments the turbo-generator includes a housing, a plurality of turbine impellers arranged within the housing, a shaft extending between and coupling the plurality of turbine impellers, and the generator is mounted within the housing between the plurality of turbine impellers. The generator includes a stator and a rotor, the rotor being rotationally coupled to the shaft.

In addition to one or more of the features described above, or as an alternative, in further embodiments the plurality of turbine impellers includes a first turbine impeller and a second turbine impeller arranged in series relative to a flow of the supercritical medium.

### BRIEF DESCRIPTION OF THE DRAWINGS

The following descriptions should not be considered limiting in any way. With reference to the accompanying figures, like elements are numbered alike:
FIG. 1 is a schematic diagram of an example of a power generation system for use in an aircraft according to an embodiment; and
FIG. 2 is a cross-sectional view of a turbo-generator suitable for use a power generation system according to an embodiment.

### DESCRIPTION

A detailed description of one or more embodiments of the disclosed apparatus and method are presented herein by way of exemplification and not limitation with reference to the Figures.

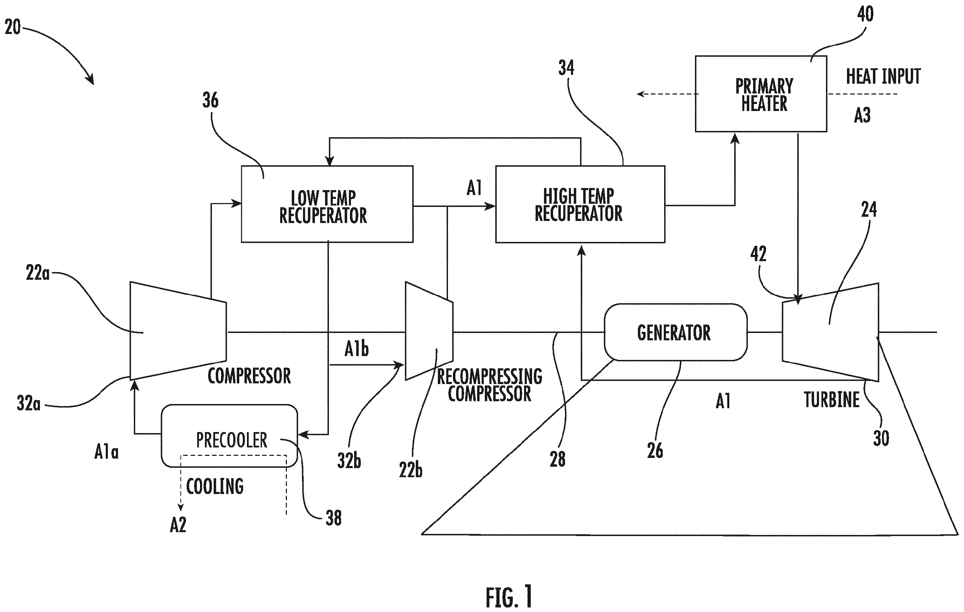

With reference now to FIG. 1, an example of a power generation system 20, is illustrated in FIG. 1. The system 20 operates as a closed-loop cycle or circuit and may be associated with a gas turbine engine of an aircraft, or with another power source of an aircraft, such as an auxiliary power unit for example. In an embodiment, the working fluid or first medium circulating through the closed-loop cycle is a supercritical fluid, such as supercritical carbon dioxide (SCO2) for example. As used herein, the term "supercritical fluid" refers to a fluid in which distinct liquid and gaseous phases do not exist.

As shown, the power generation system 20 includes at least one compressor 22, a turbine 24, and a generator 26 coaxially mounted on a common shaft 28. In the illustrated, non-limiting embodiment, the power generation system 20 includes both a first compressor 22a and a second, recompressing compressor 22b mounted coaxially to the common shaft 28. However, embodiments of the power generation system 20 that include only a single compressor, or alternatively, more than two compressors, are also within the scope of the disclosure. Each of the compressor 22a and the recompressing compressor 22b is a mechanical device that raises a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc.

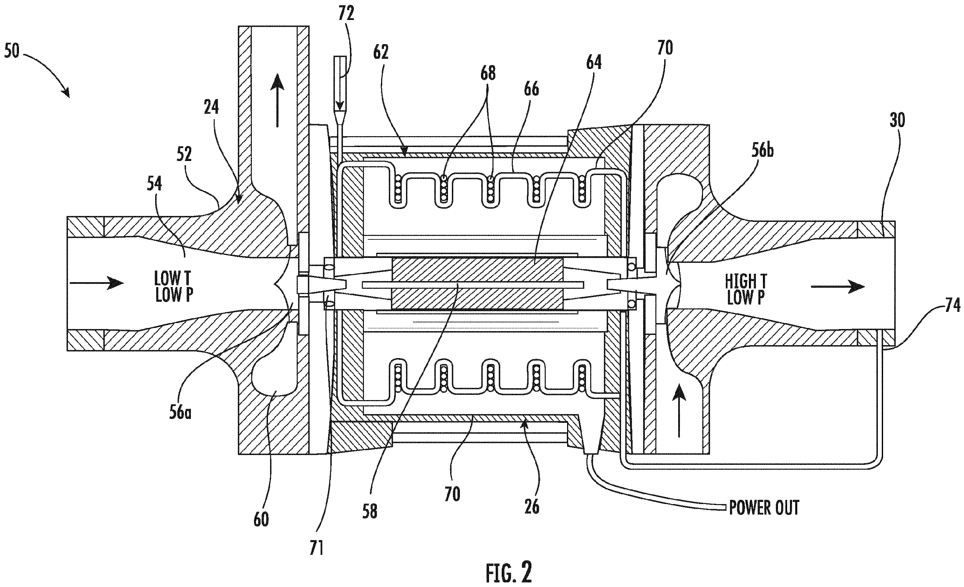

The turbine 24 is similarly a mechanical device that expands a medium and extracts work therefrom (also referred to as extracting energy). The turbine 24 may comprise a nozzle configured to accelerate a medium supplied thereto for entry into a turbine impeller (see FIG. 2). In the illustrated power generation system 20, the turbine 24 is configured to drive the at least one compressor 22 and the generator 26.

Arranged downstream from an outlet 30 of the turbine 24 and upstream from an inlet 32 of the at least one compressor 22 is at least one heat recovery heat exchanger, also referred to herein as a recuperator. In the illustrated, non-limiting embodiment, the system 20 includes a first heat recovery heat exchanger 34 and a second heat recovery heat exchanger 36. However, a system 20 having any suitable number of recuperators is contemplated herein. As shown, the first medium A1 provided at the outlet 30 of the turbine 24 is delivered to a first part of the first recuperator 34 and to a first part of the second recuperator 36 in series. In an embodiment, the first medium A1 output from the turbine 24 is cooled within both the first recuperator 34 and the second recuperator 36.

Further, in embodiments of the system 20 including a plurality of compressors 22, the first and second compressors 22a, 22b are arranged in parallel downstream from the second recuperator 36. For example, a first portion A1a of the medium A1 output from a first part of the second recuperator 36 is provided to the inlet 32a of the first compressor 22a, and a second portion A1b of the first medium A1 output from the first part of the second recuperator 36 is provided to the inlet 32b of the second compressor 22b. As shown, a precooler 38 may be disposed along the fluid flow path of the first portion A1a of the first medium, directly upstream from the first compressor 22a. Within the precooler 38, heat from a second medium or fluid A2 is transferred to the first portion A1a of the first medium A1. The cool second medium A2 output from the precooler 38 may then be used to cool one or more components of another system of an aircraft. The first portion A1a of the first medium is provided to the first compressor 22a where it is compressed. The first portion A1a of the first medium output from the first compressor 22a has a higher pressure and temperature than the first portion A1a of the first medium provided to the first compressor 22a.

In an embodiment, the supercritical first medium A1 is provided to at least one of the compressor inlets 32a, 32b after it has been cooled and expanded to a temperature and pressure that is close to its critical point. As used herein, the term "critical point" of a supercritical fluid refers to the lowest temperature and pressure at which the substance can be said to be in a supercritical state. The terms "critical temperature" and "critical pressure" refer to the temperature and pressure at the critical point.

The first portion A1a of the first medium A1 output from the first compressor 22a is provided to a second part of the second recuperator 36. Within the second recuperator 36, heat is transferred from the first medium A1 within the first part of the second recuperator 36 to the first portion A1a of the first medium within the second part of the second recuperator 36. Downstream from the second part of the second recuperator 36, the second portion A1b of the first medium A1 output from the second compressor 22b is rejoined with the first portion A1a of the first medium. The second portion A1b of the first medium output from the second compressor 22b has a higher pressure and temperature than the second portion A1b of the first medium provided to the inlet 32b of the second compressor 22b. Together, the rejoined first and second portions A1a, A1b of the first medium A1 are provided to a second part of the first recuperator 34, where heat is transferred from the first medium A1 in the first part of the first recuperator 34 to the first medium A1 in the second part of the first recuperator 34.

Downstream from the second part of the first recuperator 34 is a heater 40. In the illustrated, non-limiting embodiment, the heater 40 is a heat exchanger in which the first medium A1 is arranged in a heat transfer relationship with a third medium A3. Heat is transferred from the third medium A3 to first medium A1 within the heater 40 such that the first medium A1 output from the heater 40 and provided to an inlet 42 of the turbine 24 has an elevated temperature and pressure. The power generation system 20 illustrated and described herein is intended as an example only and it should be understood that a power generation system 20 having any suitable configuration is within the scope of the disclosure.

As previously noted, the power generation system 20 includes a generator 26 driven by a turbine 24. With reference now to FIG. 2, an example of the generator 26 and the turbine 24 of a power generation system 20 is illustrated in more detail. In the illustrated, non-limiting embodiment, the turbine 24 and the generator 26 are integrated to form a turbo-generator 50.

As shown, the turbo-generator 50 includes a housing 52 containing both the turbine 24 and the generator 26. As shown, the housing 52 includes an inlet 54 that directs the supercritical first medium A1 towards a rotating impeller 56. The impeller 56 is secured to a drive shaft 58 by any suitable means to align the impeller 56 along the axis of the turbine. The impeller 56 has a plurality of passages formed therein that cause the incoming axial flow of the first medium to turn radially and discharge into a volute 60.

In the illustrated, non-limiting embodiment, the turbo-generator 50 may include a multi-stage turbine. As shown, the turbo-generator 50 includes a first impeller 56a arranged directly downstream from the inlet 54 and a second impeller 56b, coaxially mounted to the shaft 58 and arranged in series with the first impeller 56a relative to the flow of the first medium A1. The first medium A1 is provided along an axis to a center of the first impeller 56a and is expelled radially outwardly therefrom. The first medium A1 may then be provided radially to the second impeller 56b and is output therefrom axially, such as at the opposite end of the housing 52 of the turbo-generator 50 for example.

As noted above, the shaft 58 extends within the housing 52 between the first impeller 56a and the second impeller 56b. In an embodiment, the generator 26 of the turbo-generator 50 is mounted within the housing 52, concentrically with the shaft 58, at a position between the first and second impellers 56a, 56b. As shown, the generator 26 includes a stationary stator 62 and a rotor 64 coupled to the shaft 58 for rotation therewith relative to the stator 62. Rotation of one or more impellers 56a, 56b of the turbine 24, driven by the flow of supercritical first medium A1 drives rotation of the generator rotor 64. Accordingly, rotation of the turbine 24 extracts energy from the first medium A1 and converts it into electrical energy via the generator 26. The energy created at the generator 26 may be stored, or alternatively, may be sent to an aircraft bus (not shown) where it is then supplied to one or more electrical loads of the aircraft.

A cooling system may be used in an electric machine, such as a generator for example, to keep the machine operating within an acceptable temperature range. For example, the compact, high power density turbo-generator 50 described herein utilizes working fluid of the power generation cycle to achieve a compact cooling system of the turbo-generator, i.e. to reject heat from the generator and bearings due to, for example, windage losses and electric resistive / inductive heating such as due to hysteresis and or eddy currents in the coils and magnets.

In an embodiment, the cooling system includes at least one cooling passage 70 extending through a portion of the generator 26 of the turbo-generator 50. The generator stator 62 includes a core 66 having a plurality of windings 68 arranged thereon and the one or more cooling passages 70 may be formed in the stator core 66 adjacent the windings 68, or even embedded within the windings 68. Although the generator 26 of FIG. 2, is illustrated as having two cooling passages 70 arranged in parallel, for example disposed on opposite sides of the rotational axis of the shaft 58, embodiments having any suitable number of cooling passages 70 spaced about a periphery of the stator 62, including cooling passages that extend both axially and circumferentially relative to the stator 62 are within the scope of the disclosure. Further, the at least one cooling passage 70 may be further configured to cool one or more other components of the turbo-generator 50, such as one or more bearings 71 mounted to the shaft 58, or the turbine impellers 56a, 56b for example.

The fluid or medium provided to the one or more cooling passages 70 is the same first medium A1 circulating throughout the power generation system 20. However, the first medium A1 provided to an inlet 72 of the one or more cooling passages 70 may be sourced from any suitable portion of the power generation system 20 via a bypass conduit. For example, a portion of the first medium A1 located downstream from the second recuperator 36 and upstream from both the first and second compressors 22a, 22b may be diverted to the inlet 72 of the cooling passages 70. Further, the heated first medium A1 provided at an outlet 74 of the one or more cooling passages 70 may be mixed with the first medium A1 at or directly upstream from the turbine outlet 30 to return the fluid to the cycle of the power generation system 20. Flow inlet 72 can also be provided by a combined refrigeration system within the power generation cycle, for example, by cooling and expanding some of the compressed sCO2. With potential leakage from the turbogenerator seals, windage losses in the generator due to the friction in the magnetic 'air' gap (sCO2 filled) and the bearing could be substantial. The cooling flow provided through inlet 72 helps to manage the heat rejection due to windage losses to keep the electrical and mechanical component temperature below the allowed maximum temperatures. In addition, the integrated cooling approach for the generator and seals/bearings minimizes the total system weight associated with the component thermal management.

A power generation system 20 including a turbo-generator 50 as illustrated and described herein may be configured to maximize the power density of the generator 26 while also having a fully integrated cooling architecture. As a result the total number of components and complexity of the power generation system may be reduced while maximizing the power generated by the system 20.

Aspects of the embodiments are described herein with reference to flowchart illustrations, schematics, and/or block diagrams of methods, apparatus, and/or systems according to embodiments. Further, the descriptions of the various embodiments have been presented for purposes of illustration, but are not intended to be exhaustive or limited to the embodiments disclosed. Many modifications and variations will be apparent to those of ordinary skill in the art without departing from the scope of the invention as defined by the claims. The terminology used herein was chosen to best explain the principles of the embodiments, the practical application or technical improvement over technologies found in the marketplace, or to enable others of ordinary skill in the art to understand the embodiments disclosed herein.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

While the preferred embodiment has been described, it will be understood that those skilled in the art, both now and in the future, may make various improvements and enhancements which fall within the scope of the claims which follow. These claims should be construed to maintain the proper protection.

## Claims

1. A turbo-generator comprising:
a housing (52);
a plurality of turbine impellers (56a, 56b) arranged within the housing;
a shaft (58) extending between and coupling the plurality of turbine impellers; and
a generator (50) mounted within the housing between the plurality of turbine impellers, the generator including a stator (62) having a stator core (66) including a plurality of windings (68) and a rotor (64), the rotor being rotationally coupled to the shaft; and
a cooling system including at least one cooling passage (70) integrated into the stator core of the generator.

2. The turbo-generator of claim 1, wherein an outlet (74) of the at least one cooling passage is arranged in fluid communication with an outlet of one of the plurality of turbine impellers.

3. The turbo-generator of claim 1 or 2, wherein the plurality of turbine impellers includes a first turbine impeller (56a) and a second turbine impeller (56b).

4. The turbo-generator of claim 3, wherein the first turbine impeller and the second turbine impeller are arranged in series relative to a flow of first medium, or wherein the first turbine impeller is configured to receive an axial flow of a first medium and expel the first medium radially outwardly, and the second turbine impeller is configured to receive a radial flow of the first medium and expel the first medium axially.

5. The turbo-generator of any preceding claim, wherein a fluid provided to the at least one cooling passage is operable to remove heat from the plurality of windings.

6. The turbo-generator of any preceding claim, wherein the at least one cooling passage is embedded within a portion of the plurality of windings, or wherein the at least one cooling passage is formed in the core adjacent the plurality of windings.

7. The turbo-generator of any preceding claim, wherein a first medium is provided to the plurality of turbine impellers to operate the generator, and the first medium is also provided to the at least one cooling passage.

8. A power generation system comprising:
a turbine (24);
a generator (26) including at least one cooling passage;
at least one compressor (22), the at least one compressor and the generator being operably coupled to and driven by the turbine; and
at least one heat exchanger (34, 36);
wherein the turbine, the at least one compressor, and the at least one heat exchanger are arranged in a closed-loop having a supercritical medium circulating there through, and wherein a portion of the supercritical medium is provided to the at least one cooling passage of the generator to cool the generator.

9. The power generation system of claim 8, wherein the supercritical medium is carbon dioxide.

10. The power generation system of claim 8 or 9, wherein the generator includes a stator having a core and a plurality of windings, the supercritical medium provided to the at least one cooling passage being operable to remove heat from the plurality of windings.

11. The power generation system of claim 10, wherein the at least one cooling passage is embedded within the plurality of windings, or wherein the at least one cooling passage is formed in the core adjacent the plurality of windings.

12. The power generation system of any of claims 8 to 11, wherein a bypass conduit extends from directly upstream of the at least one compressor to an inlet of the at least one cooling passage.

13. The power generation system of any of claims 8 to 12, wherein an outlet of the at least one cooling passage is arranged in fluid communication with an outlet of the turbine.

14. The power generation system of claim 18, wherein the turbo-generator includes:
a housing (52);
a plurality of turbine impellers (56a, 56b) arranged within the housing;
a shaft (58) extending between and coupling the plurality of turbine impellers; and
the generator is mounted within the housing between the plurality of turbine impellers, the generator including a stator (62) and a rotor (64), the rotor being rotationally coupled to the shaft.

15. The power generation system of claim 14, wherein the plurality of turbine impellers includes a first turbine impeller (56a) and a second turbine impeller (56b) arranged in series relative to a flow of the supercritical medium.
